# EUROPÄISCHE PATENTSCHRIFT

(11) **EP 3 181 378 B1**
(45) Veröffentlichungstag und Bekanntmachung des Hinweises auf die Patenterteilung: **21.11.2018**
(21) Anmeldenummer: 16189894.5
(22) Anmeldetag: 21.09.2016
(51) Int. Cl.: B60C 11/13, B60C 11/03

(54) **FAHRZEUGLUFTREIFEN**
PNEUMATIC TYRE
PNEUMATIQUES DE VÉHICULE

(30) Priorität: 18.12.2015 DE 102015225939
(43) Veröffentlichungstag der Anmeldung: 21.06.2017
(73) Patentinhaber: Continental Reifen Deutschland GmbH, 30165 Hannover (DE)
(72) Erfinder: Behr, Ulrich, 30167 Hannover (DE)
(74) Vertreter: Finger, Karsten

(56) Entgegenhaltungen:
- EP-A1- 3 256 334
- EP-A2- 2 316 666
- DE-A1-102012 108 383
- DE-A1-102012 109 712
- JP-A- 2004 066 837
- JP-A- 2013 116 741
- US-A1- 2007 000 590

## Beschreibung

Die Erfindung betrifft einen Fahrzeugluftreifen in Radialbauart mit einem Laufstreifen mit zumindest einer Profilrippe, welche mit einer Anzahl von über die Bodenaufstandsfläche hinaus verlaufenden Querrillen mit einer sich über ihren Verlauf ändernden Tiefe versehen ist, wobei die größte Tiefe der Querrillen 5,0 mm bis 8,0 mm beträgt und die Querrillen jeweils durch zwei Rillenflanken, einen Rillengrund und einer an einer Rillenflanke ausgebildeten, über die gesamte Erstreckung der Querrille verlaufenden Fase begrenzt sind, wobei die Fase, im Querschnitt der Querrille betrachtet, zur radialen Richtung unter einem konstanten Winkel von 35° bis 55° verläuft sowie an ihrer breitesten Stelle eine Breite von 2,0 mm bis 5,0 mm aufweist und wobei die Breite der Fase bei abnehmender Tiefe der Querrille geringer wird.

Es ist bekannt und üblich, in Laufstreifen von Fahrzeugluftreifen Profilrippen, Blockreihen und dergleichen vorzusehen, die mit Querrillen versehen sind, deren Querkanten vor allem die Traktion und das Bremsvermögen des Reifens verbessern. Der Übergang von zumindest einer der Rillenflanken der Querrillen zur Laufstreifenaußenfläche wird häufig mit einer schmalen Schrägfläche, einer Fase, versehen. Derartige Fasen sind in unterschiedlichen Ausführungen bekannt und sollen das Einrollen der jeweiligen Randkante beim Bremsen verhindern. Fasen verbreitern jedoch die Querrillen an der Laufstreifenaußenfläche was sich einerseits nachteilig auf das Abrollgeräusch des Reifens auswirkt und andererseits die Kontaktfläche des Laufstreifens zum Untergrund verkleinert wird, was sich nachteilig auf die Trockenbremseigenschaften auswirkt.

"Ein Fahrzeugluftreifen der eingangs genannten Art ist beispielsweise aus der, als Stand der Technik nach Art 54(3) geltenden WO 2016/128086 A1 bekannt. Die Profilrippe des Laufstreifens ist mit Querrillen versehen, welche sich aus einem mittleren Rillenabschnitt, einem laufstreifeninnenseitigen Rillenabschnitt und einem laufstreifenaußenseitigen Rillenabschnitt zusammensetzen. Die Querrillen erstrecken sich insgesamt im Wesentlichen gerade. An einer Rillenflanke jeder Querrille ist eine unter einem konstanten Winkel von 30° bis 50° zur radialen Richtung verlaufende Fase ausgebildet. Der laufstreifenaußenseitige Rillenabschnitt weist einen im Querschnitt U-förmigen Endabschnitt auf.

Ein weiterer Fahrzeugluftreifen, dessen Laufstreifen eine schulterseitige Profilrippe mit mit Fasen versehenen Querrillen aufweist, ist beispielsweise aus der DE 10 2012 109 712 A1 bekannt. Die Querrillen setzen sich aus drei Rillenabschnitten zusammen, wobei die beiden äußeren Rillenabschnitte zumindest im Wesentlichen in axialer Richtung verlaufen und der diese verbindende mittlere Rillenabschnitt jeweils unter einem stumpfen Winkel, welcher maximal 135° beträgt, zu den beiden äußeren Rillenabschnitten verläuft. Die beiden äußeren Rillenabschnitte weisen zumindest eine Fase auf, der mittlere Rillenabschnitt ist von zwei Fasen begrenzt.

Aus der DE 10 2012 108 383 A1, auf der der Oberbegriff von Anspruch 1 basiert, Fahrzeugluftreifen mit einem Laufstreifen bekannt, welcher mit in Rillengruppen angeordneten Rillen mit einer Breite von 0,8 mm bis 1,5 mm versehen ist. Jede Rillengruppe ist aus drei Rillen gebildet, welche von einem vertieften Zentralbereich ausgehend analog zu den Zacken eines regulären Sterns verlaufen. An den Rillenflanken sind Fasen ausgebildet.

Der Erfindung liegt die Aufgabe zu Grunde, bei einem Reifen der eingangs genannten Art, Querrillen mit Fasen derart auszugestalten, dass die erwähnten Nachteile vermieden werden.

Die gestellte Aufgabe wird erfindungsgemäß durch einen Fahrzeugluftreifen mit den Merkmalen des Anspruchs 1 gelöst. Bei dem erfindungsgemäßen Fahrzeugluftreifen verläuft jede Querrille über ihre gesamte Erstreckung entweder gerade oder leicht bogenförmig, wobei sich ihr Rillengrund aus einem laufstreifeninnenseitigen Grundabschnitt und einen laufstreifenaußenseitigen Grundabschnitt zusammensetzt, und wobei die Tiefe der Querrille am Anschlussbereich der beiden Grundabschnitte am größten ist und die Grundabschnitte jeweils zu den Enden der Querrille kontinuierlich seichter werden, sodass die Tiefe der Querrille zu ihren Enden geringer wird, und wobei die Fase über die gesamte Erstreckung der Querrille verläuft und ihre größte Breite und ihre tiefste Stelle beim Anschlussbereich der beiden Grundabschnitte aufweist.

Die Tiefe einer Querrille wirkt sich auf die lokale Steifigkeit der Profilrippen aus, wobei an tiefere Stellen angrenzende Profilrippenbereiche gegenüber an seichteren Stellen angrenzenden Profilrippenbereichen eine geringere Steifigkeit und daher eine höhere Biegefähigkeit aufweisen. Das Ausmaß des "Einrolleffektes" an einer Querrillenkante korreliert daher mit der "Biegefähigkeit" der Profilpositive an der jeweiligen Stelle. Bei erfindungsgemäß gestalteten Querrillen sind die Fasen in seichteren Querrillenbereichen schmäler, in tieferen Querrillenbereichen breiter. Durch die besondere Ausführung der Querrillen mit zwei seichter werdenden Grundabschnitten wird die Steifigkeit der Profilrippe besonders vorteilhaft vergleichmäßigt. Dadurch wird ein Einrollen der Randkanten effektiv verhindert, was dem Fahrzeugluftreifen gute Trockenbremseigenschaften und ein geringes Abrollgeräusch verleiht. Erfindungsgemäß verläuft die Fase zur radialen Richtung unter einem konstanten Winkel von 35° bis 55°.

Bei einer besonders bevorzugten Ausführungsform der Erfindung beträgt der Winkel der Fase relativ zur radialen Richtung 40° bis 50°. Auf diese Weise lässt sich eine mit der Querrillentiefe korrelierende Ausgestaltung der Fase besonders gut realisieren.

### Bei einer weiteren bevorzugten

Ausführungsform der Erfindung ist die Fase an der Außenfläche der Profilrippe, ausgehend von ihrer breitesten Stelle und bezogen auf den Querrillenverlauf, jeweils von einem konvex gekrümmten Kantenabschnitt der Randkante an der Außenfläche der Profilrippe begrenzt. Diese Ausgestaltung ermöglicht ebenfalls eine Beeinflussung der Steifigkeit der Profilrippe.

Bevorzugt ist ferner, dass die Fase zu den beiden Querrillenenden ausläuft und daher an den Querrillenenden keine Breite mehr besitzt.

Die beiden mit der Breite und dem Tiefenverlauf der Fase korrelierenden, bei den Enden der Querrille kontinuierlich seichter werdenden Grundabschnitte können bis zur Profilrippenaußenfläche an den Querrillenenden verlaufen. Möglich ist jedoch auch eine Ausführung, bei der die kontinuierlich seichter werdenden Grundabschnitte an den Enden der Querrille in radialer Richtung in einer Resttiefe von 1,0 mm bis 2,0 mm enden. Auch durch diese Maßnahmen kann Einfluss auf die Profilrippensteifigkeit genommen werden.

Bei einer bevorzugten Ausführungsform enden die Querrillen vor einer die Profilrippe begrenzenden Umfangsrille, bei einer alternativen Ausführung münden die Querrillen in eine die Profilrippe begrenzende Umfangsrille. Durch solche Maßnahmen kann Einfluss auf das Wasserableitvermögen der Querrillen genommen werden.

Eine weitere, vorteilhafte Maßnahme trägt dazu bei, ein Einrollen der Randkanten besonders effektiv zu verhindern. Diese Maßnahme besteht darin, die Querrillen in Draufsicht jeweils leicht bogenförmig verlaufend auszubilden und die Fase an der bogeninnenseitigen Rillenflanke vorzusehen.

Bei einer weiteren bevorzugten Ausführungsform sind erfindungsgemäß ausgeführte Profilrippen schulterseitige Profilrippen. Gerade in schulterseitigen Profilrippen ist es besonders vorteilhaft, erfindungsgemäß gestaltete Querrillen zur Verbesserung der Trockenbremsperformance und der Geräuschentwicklung vorzusehen.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Umfangsabschnitt einer schulterseitigen Profilrippe eines Laufstreifens eines Fahrzeugluftreifens mit einer Ausführungsvariante der Erfindung und
Fig. 2 bis Fig. 5 Schnittdarstellungen entlang der Linien II-II bis V-V.

Erfindungsgemäß ausgeführte Fahrzeugluftreifen sind vorzugsweise Reifen für Personenkraftwagen oder Vans.

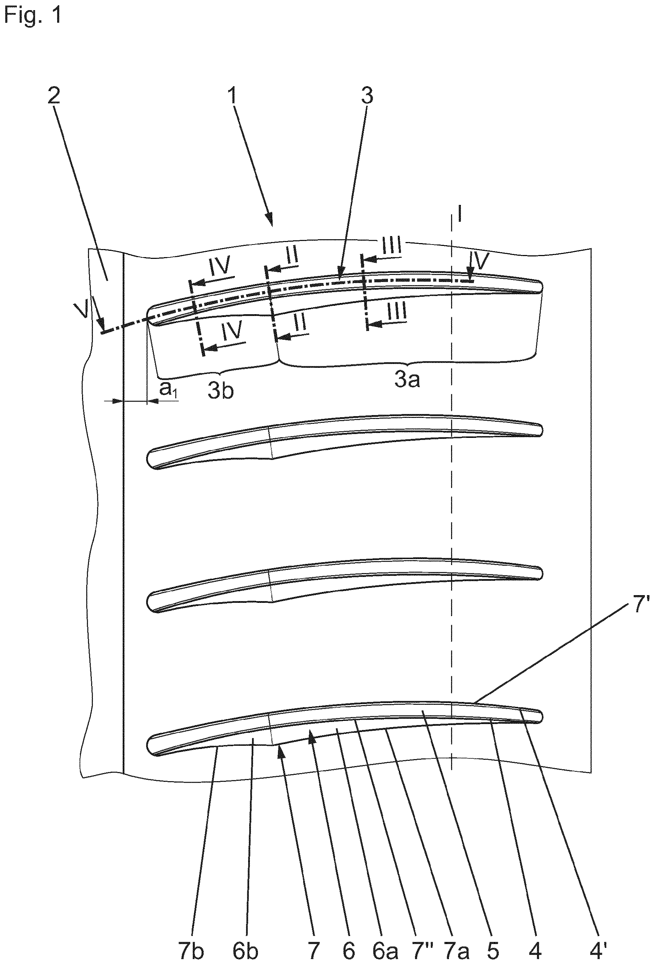

In Fig. 1 sind von einem Laufstreifen eines Fahrzeugluftreifens in Radialbauart ein Umfangsabschnitt einer schulterseitigen blockartig strukturierten Profilrippe 1 und ein Teilbereich einer die Profilrippe 1 laufstreifeninnenseitig begrenzenden Umfangsrille 2 dargestellt. Im zweiten schulterseitigen Bereich des Laufstreifens ist vorzugsweise eine zu Fig. 1 analoge Ausgestaltung vorgesehen.

Der laufstreifenaußenseitige Rand der Bodenaufstandsfläche des Reifens ist durch die Linie 1 gekennzeichnet, wobei die Bodenaufstandsfläche dem statisch ermittelten Footprint gemäß E.T.R.T.O.-Standards (Last bei 70 % der Tragfähigkeit bei einem Innendruck von 2,5 bar, Innendruck 85 % von 2,5 bar) entspricht.

Die schulterseitige Profilrippe 1 ist über ihren Umfang mit einer Vielzahl von über die Bodenaufstandsfläche hinausverlaufenden Querrillen 3 versehen, welche zumindest im Wesentlichen parallel zueinander sowie beim gezeigten Ausführungsbeispiel in Draufsicht über ihre Erstreckung leicht bogenförmig verlaufen, wobei ihre Erstreckungsrichtung im Wesentlichen der axialen Richtung entspricht bzw. um bis zu 15° von der axialen Richtung abweichen kann. In Umfangsrichtung benachbarte Querrillen 3 weisen voneinander vorzugsweise die üblichen Abstände von 20,0 mm bis 35,0 mm auf.

Jede Querrille 3 weist einen laufstreifenaußenseitigen Rillenabschnitt 3a mit einem über die Bodenaufstandsfläche hinausverlaufenden Endabschnitt und einen an den laufstreifenaußenseitigen Rillenabschnitt 3a unmittelbar anschließenden laufstreifeninnenseitigen Rillenabschnitt 3b auf, welcher beim gezeigten Ausführungsbeispiel vor der die Profilrippe 1 begrenzenden Umfangsrille 2 in einem in axialer Richtung ermittelten Abstand a₁ von beispielsweise 5,0 mm endet. Der laufstreifeninnenseitige Rillenabschnitt 3b verläuft über 20% bis 35% der gesamten Erstreckungslänge der Querrille 3.

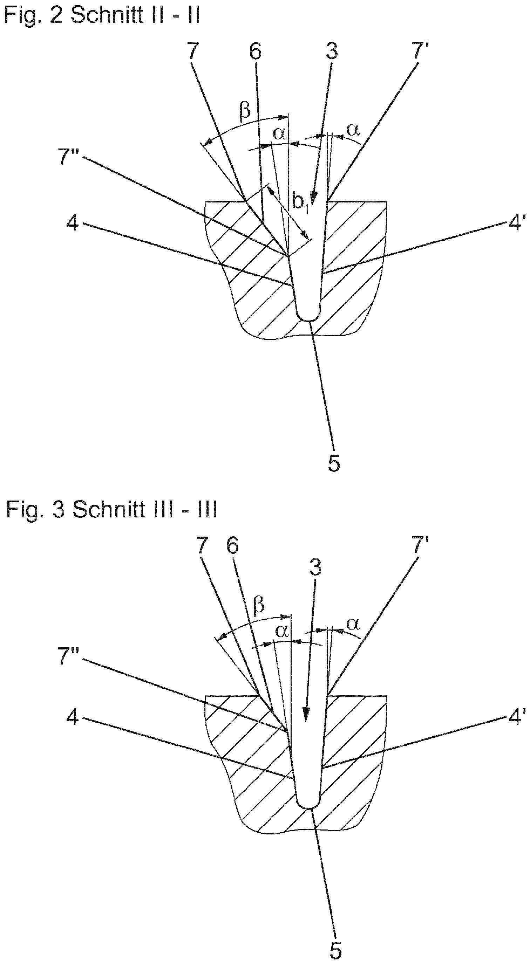

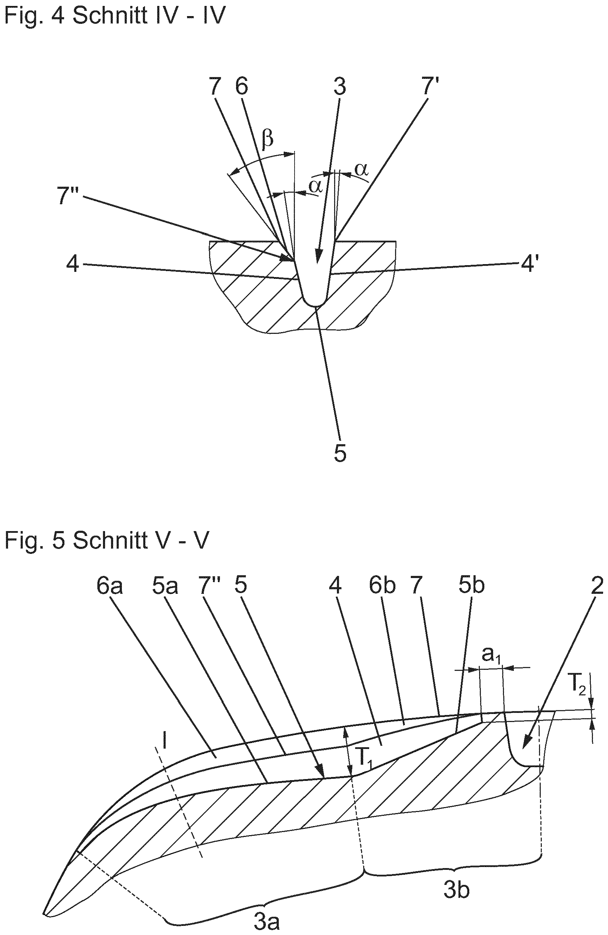

Jede Querrille 3 ist durch eine bogeninnenseitige Rillenflanke 4, eine bogenaußenseitige Rillenflanke 4' (Fig. 1 bis Fig. 4), einen Rillengrund 5 (Fig. 1 und Fig. 5) und einer an die bogeninnenseitige Rillenflanke 4 anschließende Fase 6 (Fig. 1) begrenzt. Die beiden Rillenflanken 4, 4' schließen an den Rillengrund 5 an und verlaufen beim gezeigten Ausführungsbeispiel jeweils unter einem Winkel α (Fig. 2 bis Fig. 4) zur radialen Richtung, welcher bis zu 10°, vorzugsweise 3° bis 5°, beträgt. Die beiden Rillenflanken 4, 4' können daher auch in radialer Richtung verlaufen. Gemäß Fig. 2 bis Fig. 4 verläuft die Rillenflanke 4' zwischen dem Rillengrund 5 und einer an der Laufstreifenaußenfläche befindlichen Randkante 7', die gemäß der Bogenform der Querrille 3 ebenfalls bogenförmig verläuft. Die Rillenflanke 4 endet bei einer zwischen ihr und der Fase 6 gebildeten Randkante 7", die in Draufsicht parallel zur Randkante 7' verläuft, jedoch einen speziellen Tiefenverlauf aufweist, wie noch beschrieben wird. Die an der Rillenflanke 4 angesetzte Fase 6 ist ferner von einer an der Laufstreifenaußenfläche befindlichen Randkante 7 begrenzt, deren spezieller Verlauf ebenfalls noch beschrieben wird. Der gegenseitige Abstand der Rillenflanken 4, 4' beträgt 2,0 mm bis 5,0 mm und variiert entsprechend der Rillenflankenneigung.

Gemäß Fig. 5 weist der Rillengrund 5 zwei Grundabschnitte 5a, 5b auf, einen im laufstreifenaußenseitigen Rillenabschnitt 3a verlaufenden laufstreifenaußenseitigen Grundabschnitt 5a und einen im laufstreifeninnenseitigen Rillenabschnitt 3b verlaufenden laufstreifeninnenseitigen Grundabschnitt 5b. Die Tiefe des laufstreifenaußenseitigen Rillenabschnittes 3a nimmt entsprechend der Laufstreifenaußenkontur zur Laufstreifenaußenseite geringfügig ab. Die Tiefe des laufstreifeninnenseitigen Rillenabschnitt 3b wird in Richtung des laufstreifeninnenseitigen Querrillenendes kontinuierlich geringer. Die Querrille 3 weist daher beim Anschlussbereich der Rillenabschnitte 3a, 3b ihre größte Tiefe T₁ auf, welche an dieser Stelle 5,0 mm bis 8,0 mm, beträgt. Der laufstreifeninnenseitige Grundabschnitt 5a verläuft im Wesentlichen linear ansteigend und weist am Querrillenende eine Resttiefe T₂ von 1,0 mm bis 2,0 mm auf.

Wie Fig. 2 bis Fig. 4 zeigen, ist die eine Schrägfläche bildende Fase 6 zur radialen Richtung unter einem konstanten Winkel β geneigt, welcher 35° bis 55°, vorzugsweise 40° bis 50°, und insbesondere zirka 45° beträgt. Beim Anschlussbereich der Grundabschnitte 5a, 5b weist die Fase 6 ihre größte Breite b₁ von 2,0 mm bis 5,0 mm auf und reicht an dieser Stelle am tiefsten in die Querrille 3 hinein (Fig. 2). Gemäß Fig. 1 wird die Fase 6 zu den beiden Enden der Querrille 3 kontinuierlich schmäler und läuft an den Rillenenden mit der Rillenflanke 4 zusammen bzw. aus, sodass sich die Breite der Fase 6 mit abnehmender Tiefe der Querrille 3 bzw. mit abnehmender Tiefe des jeweiligen Grundabschnittes 5a, 5b kontinuierlich verringert.

Die Fase 6 weist daher einen im laufstreifenaußenseitigen Rillenabschnitt 3a verlaufenden laufstreifenaußenseitigen Fasenabschnitt 6a und einen im laufstreifeninnenseitigen Rillenabschnitt 3b verlaufenden laufstreifeninnenseitigen Fasenabschnitt 6b auf. An der Außenfläche der Profilrippe 1 ist der Fasenabschnitt 6a von einem in Draufsicht leicht bogenförmigen laufstreifenaußenseitigen Kantenabschnitt 7a der Randkante 7 begrenzt. Analoges gilt für den Fasenabschnitt 6b, welcher von einem in Draufsicht leicht bogenförmigen laufstreifeninnenseitigen Kantenabschnitt 7b begrenzt ist. Bezogen auf die jeweilige Querrille 3 sind die bogenförmigen Kantenabschnitte 7a, 7b in Draufsicht jeweils konvex gekrümmt und verlaufen zueinander flach V-förmig. Die zwischen der Rillenflanke 4 und der Fase 6 ausgebildete Randkante 7" verläuft ebenfalls flach V-förmig mit ihrer tiefsten Stelle bei der tiefsten Stelle des Rillengrundes 5.

Die Querrillen 3 können auch in Profilrippen im mittleren Laufstreifenbereich vorgesehen sein, wobei sie sich in Draufsicht auch im Wesentlichen gerade erstrecken können. Ferner können die Querrillen 3 auch in die Umfangsrille 2 einmünden.

### Bezugsziffernliste

- 1: Profilrippe
- 2: Umfangsrille
- 3: Querrille
- 3a, 3b: Rillenabschnitt
- 4, 4': Rillenflanke
- 5: Rillengrund
- 5a, 5b: Grundabschnitt
- 6: Fase
- 6a, 6b: Fasenabschnitt
- 7, 7', 7": Randkante
- 7a, 7b: Kantenabschnitt
- a₁: Abstand
- b₁: Breite
- α, β: Winkel
- T₁: Tiefe
- T₂: Resttiefe

## Patentansprüche

1. Fahrzeugluftreifen in Radialbauart mit einem Laufstreifen mit zumindest einer Profilrippe (1), welche mit einer Anzahl von Querrillen (3) mit einer sich über ihren Verlauf ändernden Tiefe versehen ist, wobei die größte Tiefe (T₁) der Querrillen (3) 5,0 mm bis 8,0 mm beträgt und die Querrillen (3) jeweils durch zwei Rillenflanken (4, 4'), einen Rillengrund (5) und einer an einer Rillenflanke (4) ausgebildeten, über die gesamte Erstreckung der Querrille (3) verlaufende Fase (6) begrenzt sind, wobei die Fase (6), im Querschnitt der Querrille (3) betrachtet, an ihrer breitesten Stelle eine Breite (b₁) von 2,0 mm bis 5,0 mm aufweist und wobei die Breite der Fase (6) bei abnehmender Tiefe der Querrille (3) geringer wird, wobei außerdem jede Querrille (3) über ihre gesamte Erstreckung entweder gerade oder leicht bogenförmig verläuft und sich ihr Rillengrund (5) aus einem laufstreifeninnenseitigen Grundabschnitt (5b) und einen laufstreifenaußenseitigen Grundabschnitt (5a) zusammensetzt, wobei die Tiefe (T₁) der Querrille (3) am Anschlussbereich der beiden Grundabschnitte (5a, 5b) am größten ist und die Grundabschnitte (5a, 5b) jeweils zu den Enden der Querrille (3) kontinuierlich seichter werden, sodass die Tiefe der Querrille (3) zu ihren Enden geringer wird, und wobei die Fase (6) ihre größte Breite (b₁) und ihre tiefste Stelle beim Anschlussbereich der beiden Grundabschnitte (5a, 5b) aufweist,
**dadurch gekennzeichnet, dass** die Querrillen über die Bodenaufstandsfläche hinaus verlaufen und dass die Fase (6) zur radialen Richtung unter einem konstanten Winkel (ß) von 35° bis 55° verläuft.

2. Fahrzeugluftreifen nach Anspruch 1, **dadurch gekennzeichnet, dass** der Winkel (β) der Fase (6) relativ zur radialen Richtung 40° bis 50° beträgt.

3. Fahrzeugluftreifen nach einem der Ansprüche 1 oder 2, **dadurch gekennzeichnet, dass** die Fase (6) an der Außenfläche der Profilrippe (1), ausgehend von ihrer breitesten Stelle und bezogen auf den Querrillenverlauf, jeweils von einem konvex gekrümmten Kantenabschnitt (7a, 7b) einer Randkante (7) begrenzt ist.

4. Fahrzeugluftreifen nach einem der Ansprüche 1 bis 3, **dadurch gekennzeichnet, dass** die Fase (6) zu den beiden Querrillenenden ausläuft.

5. Fahrzeugluftreifen nach einem der Ansprüche 1 bis 4, **dadurch gekennzeichnet, dass** die Grundabschnitte (5a, 5b) an den Enden der Querrille (3) in radialer Richtung in einer Resttiefe (T₂) von 1,0 mm bis 2,0 mm enden.

6. Fahrzeugluftreifen nach einem der Ansprüche 1 bis 5, **dadurch gekennzeichnet, dass** die Querrillen (3) in eine die Profilrippe (1) begrenzende Umfangsrille (2) münden.

7. Fahrzeugluftreifen nach einem der Ansprüche 1 bis 5, **dadurch gekennzeichnet, dass** die Querrillen (3) vor einer die Profilrippe (1) begrenzende Umfangsrille (2) enden.

8. Fahrzeugluftreifen nach einem der Ansprüche 1 bis 7, **dadurch gekennzeichnet, dass** der Querrillen (3) in Draufsicht jeweils leicht bogenförmig verlaufen und die Fase (6) an der bogeninnenseitigen Rillenflanke (4) ausgebildet ist.

9. Fahrzeugluftreifen nach einem der Ansprüche 1 bis 8, **dadurch gekennzeichnet, dass** die Profilrippe (1) eine schulterseitige Profilrippe (1) ist.

## Claims

1. Pneumatic vehicle tyre of radial type of construction, having a tread with at least one profile rib (1) which is equipped with a number of transverse channels (3) with a depth which varies over the course thereof, wherein the greatest depth (T₁) of the transverse channels (3) amounts to 5.0 mm to 8.0 mm, and the transverse channels (3) are each delimited by two channel flanks (4, 4'), by a channel base (5) and by a bevel (6) which is formed on one channel flank (4) and which runs over the entire extent of the transverse channel (3), wherein the bevel (6), as viewed in the cross section of the transverse channel (3), has at its widest point a width (b₁) of 2.0 mm to 5.0 mm, and wherein the width of the bevel (6) becomes smaller with decreasing depth of the transverse channel (3), wherein furthermore, each transverse channel (3) runs in either straight or slightly arcuate fashion over its entire extent, and its channel base (5) is made up of a base section (5b) at the tread inner side and of a base section (5a) at the tread outer side, wherein the depth (T₁) of the transverse channel (3) is at its greatest at the connection region of the two base sections (5a, 5b), and the base sections (5a, 5b) each become continuously shallower towards the ends of the transverse channel (3), such that the depth of the transverse channel (3) becomes smaller towards its ends, and wherein the bevel (6) has its greatest width (b₁) and its lowest point at the connection region of the two base sections (5a, 5b), **characterized in that** the transverse channels extend beyond the ground contact patch and **in that** the bevel (6) runs at a constant angle (β) of 35° to 55° with respect to the radial direction.

2. Pneumatic vehicle tyre according to Claim 1, **characterized in that** the angle (β) of the bevel (6) relative to the radial direction amounts to 40° to 50°.

3. Pneumatic vehicle tyre according to either of Claims 1 and 2, **characterized in that** the bevel (6) is, at the outer surface of the profile rib (1), proceeding from its widest point and in relation to the transverse channel course, delimited in each case by a convexly curved edge section (7a, 7b) of a marginal edge (7).

4. Pneumatic vehicle tyre according to one of Claims 1 to 3, **characterized in that** the bevel (6) tapers off towards both transverse channel ends.

5. Pneumatic vehicle tyre according to one of Claims 1 to 4, **characterized in that** the base sections (5a, 5b) end, at the ends of the transverse channel (3), with a residual depth (T₂) in the radial direction of 1.0 mm to 2.0 mm.

6. Pneumatic vehicle tyre according to one of Claims 1 to 5, **characterized in that** the transverse channels (3) open into a circumferential channel (2) which delimits the profile rib (1).

7. Pneumatic vehicle tyre according to one of Claims 1 to 5, **characterized in that** the transverse channels (3) end before a circumferential channel (2) which delimits the profile rib (1).

8. Pneumatic vehicle tyre according to one of Claims 1 to 7, **characterized in that** the transverse channels (3), in plan view, each run in slightly arcuate fashion, and the bevel (6) is formed on the channel flank (4) at the inside of the arc.

9. Pneumatic vehicle tyre according to one of Claims 1 to 8, **characterized in that** the profile rib (1) is a shoulder-side profile rib (1).

## Revendications

1. Pneumatique de véhicule de construction radiale comprenant une bande de roulement avec au moins une nervure profilée (1), qui est pourvue d'une pluralité de rainures transversales (3) ayant une profondeur variant sur leur étendue, la plus grande profondeur (T₁) des rainures transversales (3) étant de 5,0 mm à 8,0 mm et les rainures transversales (3) étant à chaque fois limitées par deux flancs de rainure (4, 4'), un fond de rainure (5) et un biseau (6) réalisé au niveau d'un flanc de rainure (4) s'étendant sur toute l'étendue de la rainure transversale (3), le biseau (6), vu en coupe transversale à travers la rainure transversale (3), présentant à son endroit le plus large une largeur (b₁) de 2,0 mm à 5,0 mm et la largeur du biseau (6) diminuant avec la diminution de la profondeur de la rainure transversale (3), chaque rainure transversale (3) s'étendant en outre sur toute son étendue soit en ligne droite soit de manière légèrement courbée et son fond de rainure (5) se composant d'une portion de fond (5b) du côté intérieur de la bande de roulement et d'une portion de fond (5a) du côté extérieur de la bande de roulement, la profondeur (T₁) de la rainure transversale (3) au niveau de la région de raccordement des deux portions de fond (5a, 5b) étant la plus grande et les portions de fond (5a, 5b) devenant de moins en moins profondes en continu à chaque fois vers les extrémités de la rainure transversale (3), de telle sorte que la profondeur de la rainure transversale (3) diminue vers ses extrémités, et le biseau (6) présentant sa plus grande largeur (b₁) et son emplacement le plus profond au niveau de la région de raccordement des deux portions de fond (5a, 5b), **caractérisé en ce que** les rainures transversales s'étendent au-delà de la surface d'appui au sol et **en ce que** le biseau (6) s'étend, par rapport à la direction radiale, suivant un angle constant (β) de 35° à 55°.

2. Pneumatique de véhicule selon la revendication 1, **caractérisé en ce que** l'angle (β) du biseau (6) par rapport à la direction radiale est de 40° à 50°.

3. Pneumatique de véhicule selon l'une quelconque des revendications 1 ou 2, **caractérisé en ce que** le biseau (6) est limité au niveau de la surface extérieure de la nervure profilée (1), à partir de son emplacement le plus large et par rapport à l'étendue de la rainure transversale, à chaque fois par une portion d'arête de courbure convexe (7a, 7b) d'une arête de bord (7).

4. Pneumatique de véhicule selon l'une quelconque des revendications 1 à 3, **caractérisé en ce que** le biseau (6) se termine vers les deux extrémités de rainure transversale.

5. Pneumatique de véhicule selon l'une quelconque des revendications 1 à 4, **caractérisé en ce que** les portions de fond (5a, 5b) se terminent aux extrémités de la rainure transversale (3) dans la direction radiale avec une profondeur résiduelle (T₂) de 1,0 mm à 2,0 mm.

6. Pneumatique de véhicule selon l'une quelconque des revendications 1 à 5, **caractérisé en ce que** les rainures transversales (3) débouchent dans une rainure périphérique (2) limitant la nervure profilée (1).

7. Pneumatique de véhicule selon l'une quelconque des revendications 1 à 5, **caractérisé en ce que** les rainures transversales (3) se terminent avant une rainure périphérique (2) limitant la nervure profilée (1).

8. Pneumatique de véhicule selon l'une quelconque des revendications 1 à 7, **caractérisé en ce que** les rainures transversales (3), en vue de dessus, s'étendent à chaque fois de manière légèrement courbée et le biseau (6) est réalisé au niveau du flanc de rainure (4) du côté intérieur de la courbure.

9. Pneumatique de véhicule selon l'une quelconque des revendications 1 à 8, **caractérisé en ce que** la nervure profilée (1) est une nervure profilée (1) du côté de l'épaulement.
